# EUROPEAN PATENT SPECIFICATION

(11) **EP 4 115 725 B1**
(45) Date of publication and mention of the grant of the patent: **15.04.2026**
(21) Application number: 22177034.0
(22) Date of filing: 02.06.2022
(51) Int. Cl.: A01D 43/063

(54) **MOWER**
MÄHER
TONDEUSE

(30) Priority: 07.07.2021 JP 2021112776
(43) Date of publication of application: 11.01.2023
(73) Proprietor: Kubota Corporation, Osaka-shi, Osaka 556-8601 (JP)
(72) Inventor: YAMASHITA, Nobuyuki, SAKAI-SHI, OSAKA, 5900823 (JP); SATO, Seiya, SAKAI-SHI, OSAKA, 5900823 (JP)
(74) Representative: Cabinet Beau de Loménie

(56) References cited:
- EP-A2- 3 653 041
- EP-B1- 3 278 654
- JP-B2- 4 371 222

## Description

### CROSS REFERENCE TO RELATED APPLICATIONS

This application claims the benefit of priority to Japanese Patent Applications No. 2021-112776 filed on July 7, 2021.

### BACKGROUND OF THE INVENTION

### FIELD OF THE INVENTION

The present invention relates to a mower.

### DESCRIPTION OF THE RELATED ART

Japanese Unexamined Patent Application Publication, Tokukai, No. 2006-246804 discloses a mower including a mower unit, a grass collector, and a guide duct configured to guide grass mown by the mower unit to the grass collector. The grass collector includes a front wall with which the guide duct is connected and a fullness detector at a lower portion of the front wall. The fullness detector is configured to detect in response to being pressed by mown grass in the grass collector that the grass collector has become full of mown grass. There has been a demand for a mower including a fullness detector with a detection sensitivity adjustable in accordance with various conditions such as the state of the work area for a mowing operation, the kind of grass, and whether the grass is wet. The present invention has an object of providing a mower including a fullness detector with an easily adjustable detection sensitivity.
JP 4 371222 B2 discloses an apparatus for collecting grass of a lawn mower.

### SUMMARY OF THE INVENTION

A mower according to the present invention includes:
a mower unit;
a grass collector configured to store mown grass;
a guide duct extending from the mower unit to the grass collector and configured to guide grass mown by the mower unit to the grass collector; and
a fullness detector configured to detect that the grass collector has become full of mown grass,
the fullness detector including:
   a receiver swingable in an up-down direction about a horizontal axis, extending in an extension direction away from the axis, and configured to be pressed toward a first side by mown grass in contact with the receiver;
   an urging member urging the receiver toward a second side opposite to the first side; and
   a detection sensor configured to detect that the receiver has been pressed by mown grass;
characterized in that the fullness detector includes a weight attached to the receiver and movable in the extension direction of the receiver toward or away from the axis to adjust a sensitivity with which the receiver swings in response to a press by mown grass.

The present invention is configured as follows: In response to the grass collector becoming full of mown grass, the receiver of the fullness detector is pressed by the mown grass against the urging force of the urging member. The detection sensor then detects that the receiver has been pressed by the mown grass. The fullness detector thus detects that the grass collector has become full. The fullness detector for the present invention includes a weight attached to the receiver and having a moment for swinging the receiver. With the receiver configured, for instance, to be pressed downward by mown grass against the urging force of the urging member, the weight applies its moment load in such a direction as to decrease the urging force. With the receiver configured, for instance, to be pressed upward by mown grass against the urging force of the urging member, the weight applies its moment load in such a direction as to increase the urging force. The present invention is configured such that the weight is attached to the receiver in such a manner as to be movable in the direction in which the receiver extends. Moving the weight to adjust the length of the moment arm (that is, the distance between the axis of the receiver and the weight) changes the level of the moment of the weight for swinging the receiver. With this configuration, adjusting the level of the moment of the weight to decrease the urging force of the urging member allows the receiver to be swung even in response to weak press by mown grass and the detection sensor to detect that the receiver has been pressed. The fullness detector, in this case, has a high detection sensitivity (sensitive). In contrast, adjusting the level of the moment of the weight to increase the urging force of the urging member allows the receiver to be swung only in response to strong press by mown grass. The fullness detector, in this case, has a low detection sensitivity (insensitive). With the present invention, simply moving the weight on the receiver to a different position allows the detection sensitivity of the fullness detector to be easily adjusted in accordance with various states such as the state of the work area for a mowing operation.

In one preferred embodiment of the present invention, the mower is further arranged such that
the weight is attached to a first face of the receiver which first face is opposite to a second face of the receiver which second face is configured to be pressed toward the first side by the mown grass in contact with the receiver.

The above configuration prevents mown grass from easily coming into contact with the weight when pressing the receiver. This reduces the possibility of mown grass being caught by the weight and hindering the swing of the receiver. This in turn allows the fullness detector to operate more stably.

In one preferred embodiment of the present invention, the mower further includes:
a position change operation tool manually operable to fix and unfix the weight and to move the weight in the extension direction of the receiver.

The above configuration allows the operator to use the position change operation tool to unfix, move, and fix the weight on the receiver. This allows the operator to perform these operations conveniently.

In one preferred embodiment of the present invention, the mower is further arranged such that
the fullness detector is provided for a bottom portion of the guide duct, and
the detection sensor is configured to detect that the receiver has been pressed downward by mown grass.

With a mower configured such that mown grass from a mower unit is guided through a guide duct into a grass collector, the mown grass in the grass collector may accumulate unevenly, depending on, for example, the kind of grass in the work area or whether the grass is wet. When the grass collector has become full (or almost full), the mown grass blocks an inlet portion of the grass collector with which the guide duct is connected. This prevents mown grass from the mower unit from entering the grass collector. Continuing to mow grass in this state leads to mown grass from the mower unit starting to accumulate on the bottom of that portion of the guide duct which is connected with the grass collector. The accumulation of mown grass on the bottom of the guide duct then grows toward the mower unit. Assuming that a fullness detector is on the grass collector under the above circumstances. In such a case, even if the grass collector has actually become full of mown grass, its uneven accumulation may leave the receiver of the fullness detector unpressed by the mown grass and lead to the fullness detector failing to detect that the grass collector has become full. In response to mown grass blocking the inlet portion of the grass collector, the accumulation of mown grass from the mower unit grows from the bottom of the inlet portion of the grass collector toward the mower unit on the bottom portion of the guide duct. With this in view, the above mower is configured to determine in response to mown grass blocking the inlet portion of the grass collector that the grass collector has become full. With the fullness detector on the bottom portion of the guide duct, the receiver is configured to be pressed downward by mown grass in an appropriate manner. This allows the fullness detector to operate stably.

In one preferred embodiment of the present invention, the mower is further arranged such that
the axis is orthogonal to a direction in which the guide duct extends, and
the receiver extends away from the axis toward a side opposite to the grass collector.

As described above, in response to mown grass blocking the inlet portion of the grass collector with which the guide duct is connected, the accumulation of mown grass from the mower unit may grow from the bottom of the inlet portion toward the mower unit on the bottom portion of the guide duct. In such a case, if the fullness detector includes a receiver extending from its axis toward the grass collector, the far end of the receiver may catch mown grass as its accumulation grows on the bottom portion of the guide duct toward the mower unit and thereby prevent the mown grass from coming onto the receiver. This may cause the receiver to fail to be pressed downward by the mown grass. With this in view, the above mower is configured such that the receiver of the fullness detector extends from its axis toward the side opposite to the grass collector. This allows the accumulation of mown grass to grow easily from the position of the axis of the receiver onto its upper face as it grows on the bottom portion of the guide duct toward the mower unit. This in turn allows the fullness detector to operate stably.

In one preferred embodiment of the present invention, the mower is further arranged such that
the bottom portion includes:
   a first bottom surface portion with an end on a side toward the grass collector;
   a second bottom surface portion extending downward from the end of the first bottom surface portion; and
   a third bottom surface portion extending from a lower portion of the second bottom surface portion toward the grass collector, and
the fullness detector is provided for the third bottom surface portion.

If the fullness detector includes a receiver extending from its axis toward the side opposite to the grass collector as described above, mown grass from the mower unit may be caught by the far end of the receiver when guided through the guide duct into the grass collector. With the above configuration, the guide duct has a bottom portion with an area from the second bottom surface portion to the third bottom surface portion which area is below the first bottom surface portion as viewed from the mower unit toward the grass collector through the guide duct. Providing the fullness detector for the third bottom surface portion thus allows the fullness detector to be hidden behind the first bottom surface portion. This reduces the possibility of the far end of the receiver catching mown grass being guided from the mower unit through the guide duct toward the grass collector. This in turn allows the fullness detector to operate stably. Even if the operator did not stop the mowing operation in a timely manner after the fullness detector detected that the grass collector has become full, the second bottom surface portion will temporarily hold the forward growth of the accumulation of mown grass. The operator can stop the mowing operation during that time period to prevent the accumulation of mown grass from growing further forward to reach the mower unit.

The above and other elements, features, steps, characteristics and advantages of the present invention will become more apparent from the following detailed description of the preferred embodiments with reference to the attached drawings.

### BRIEF DESCRIPTION OF THE DRAWINGS

Embodiments of the invention will now be described with reference to the accompanying drawings in which:
Fig. 1 is a left side view of a mower,
Fig. 2 is a left side view of a mower with a grass collecting container lifted,
Fig. 3 is an exploded perspective view of a guide duct with a bottom portion and a fullness detector,
Fig. 4 is a cross-sectional left side view of a portion of a guide duct which portion includes a bottom portion and a fullness detector, and
Fig. 5 is a bottom view of a portion of a guide duct which portion includes a bottom portion and a fullness detector.

### DETAILED DESCRIPTION OF THE PREFERRED EMBODIMENTS

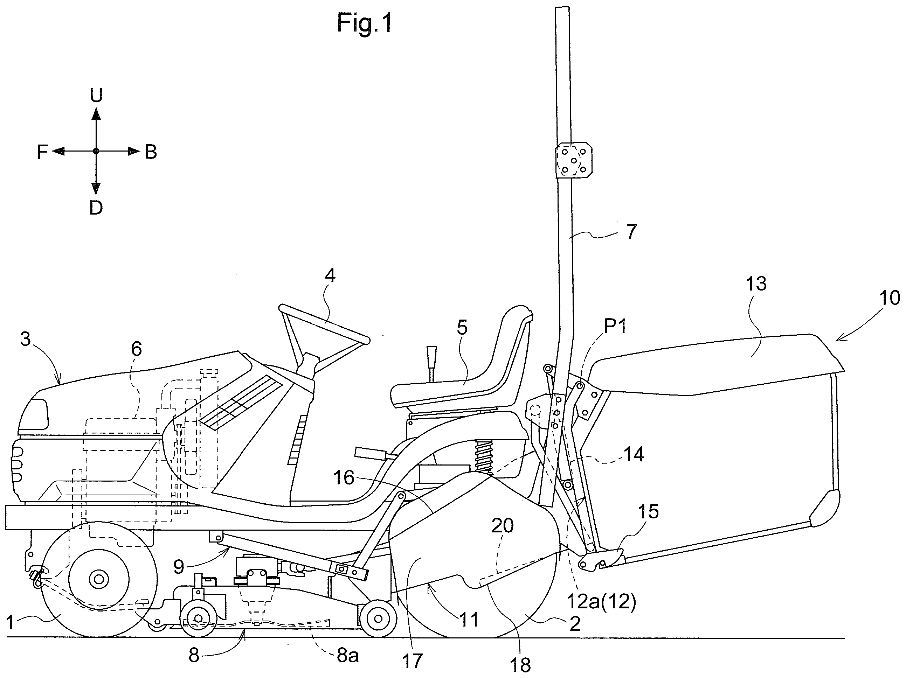

Figs. 1 to 5 illustrate a riding-type mower. Figs. 1 to 5 show arrow F to indicate the forward direction, arrow B to indicate the backward direction, arrow U to indicate the upward direction, arrow D to indicate the downward direction, arrow L to indicate the leftward direction, and arrow R to indicate the rightward direction.

As illustrated in Fig. 1, the mower includes left and right front wheels 1, left and right rear wheels 2, a body 3 supported by the front wheels 1 and the rear wheels 2 in such a manner as to be capable of traveling, a steering wheel 4 disposed on the body 3 for use to turn the front wheels 1, a driver's seat 5 on the body 3, an engine 6 at a front portion of the body 3, and a ROPS frame 7 at a back portion of the body 3.

The mower includes a mower unit 8 and a link mechanism 9. The mower unit 8 is disposed between the front wheels 1 and the rear wheels 2, and is suspended from the body 3 with use of the link mechanism 9. The mower unit 8 includes blades 8a arranged in the left-right direction and each drivable to rotate about an axis extending in the up-down direction. The mower also includes a grass collector 10 and a guide duct 11. The grass collector 10 is supported by a back portion of the body 3 and capable of storing mown grass. The guide duct 11 extends from the mower unit 8 to the grass collector 10.

The above configuration allows the mower to operate as follows: As the body 3 travels forward, the mower unit 8 mows grass with use of its blades 8a. The rotation of the blades 8a produces a conveyance wind, which guides the mown grass through the guide duct 11 into the grass collector 10 for storage.

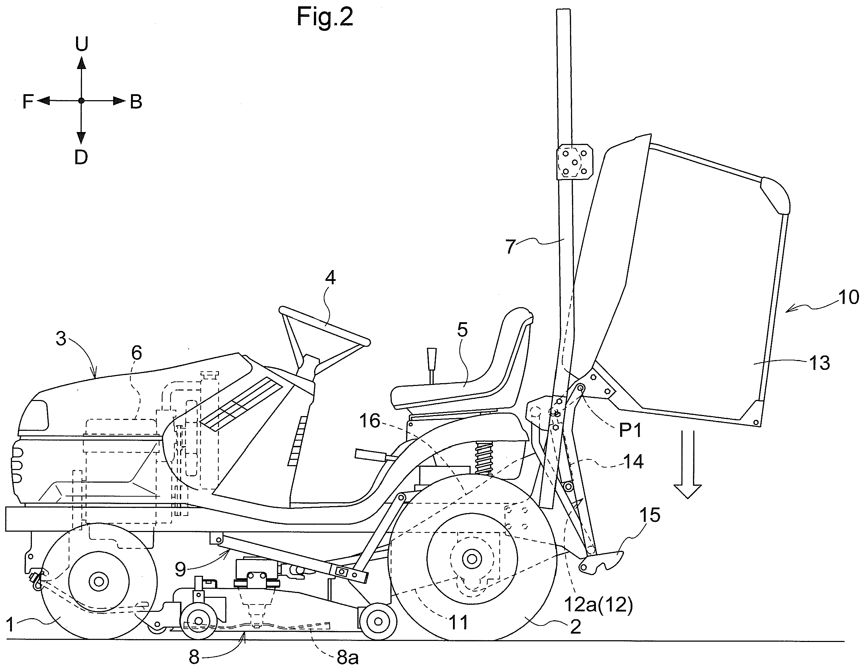

The description below deals with how the grass collector 10 is configured. As illustrated in Figs. 1 and 2, the grass collector 10 includes a plate-shaped front wall 12 and a box-shaped grass container 13.

The front wall 12 is coupled to a back portion of the body 3, and has a width equivalent to the distance between the rear wheels 2. The front wall 12 has an opening 12a. The guide duct 11 has a dimension in the up-down direction which dimension extends from the upper end of the front wall 12 to its lower end, and extends from a central portion in the left-right direction of a back portion of the mower unit 8 to the opening 12a.

The grass container 13 includes (i) a box-shaped frame, (ii) permeable members such as perforated metal plates or meshes attached to the bottom, back, and lateral sides of the frame, and (iii) a non-permeable top plate attached to the top of the frame. The frame is open on its front.

The grass container 13 has a front portion with upper left and upper right portions held respectively by upper left and upper right portions of the front wall 12 in such a manner as to be swingable about an axis P1 extending in the left-right direction. The mower includes a lifting/lowering cylinder 14 connected with the front wall 12 and the grass container 13 and configured to lift and lower the grass container 13 about the axis P1.

Fig. 1 illustrates the grass container 13 having been lowered with use of the lifting/lowering cylinder 14 into a working state. The front wall 12 has a lower portion provided with left and right lock members 15. The lock members 15 in Fig. 1 are engaged with the grass container 13, so that the grass container 13 is fixed in its working state. The grass container 13 in its working state has a front portion connected with the front wall 12, so that the grass container 13 has a front portion closed by the front wall 12.

The mower is configured as described above to, with the grass container 13 in its working state, guide grass mown by the mower unit 8 through the guide duct 11 and the opening 12a in the front wall 12 into the grass collector 10 (which includes the front wall 12 and the grass container 13) for storage. The operator stops the mowing operation in response to the grass collector 10 becoming full. The operator then, as indicated in Fig. 2, unlocks the lock members 15 and lifts the grass container 13 with use of the lifting/lowering cylinder 14 to let the grass container 13 discharge mown grass on its front side onto the ground.

The description below deals with how the guide duct 11 is configured. The guide duct 11 is in the shape of a pipe with a rectangular cross section, and as illustrated in Fig. 1, includes a top portion 16, left and right lateral portions 17, and a bottom portion 18.

The top portion 16 is in the shape of a plate, and is connected with the mower unit 8 and that portion of the front wall 12 which forms the upper end of the opening 12a. The lateral portions 17 are each in the shape of a plate connected with the mower unit 8, and are connected with those portions of the front wall 12 which respectively form the left and right ends of the opening 12a.

As illustrated in Figs. 1, 3, and 4, the bottom portion 18 is in the shape of a bent plate, and includes a first bottom surface portion 18a, a second bottom surface portion 18b, and a third bottom surface portion 18c. The first bottom surface portion 18a is connected with the mower unit 8, and extends therefrom obliquely in an upward and backward direction. The second bottom surface portion 18b extends downward from the back end of the first bottom surface portion 18a (that is, the end thereof toward the grass collector 10).

The third bottom surface portion 18c extends from the lower end of the second bottom surface portion 18b obliquely in an upward and backward direction toward the grass collector 10, and is connected with that portion of the front wall 12 which forms the lower end of the opening 12a. The third bottom surface portion 18c has a rectangular opening 18d. The bottom portion 18 is provided with left and right frame members 19 extending in the longitudinal direction of the guide duct 11 (that is, the front-back direction) and coupled to those portions of the lower surface of the bottom portion 18 which are respectively to the left and right of the opening 18d.

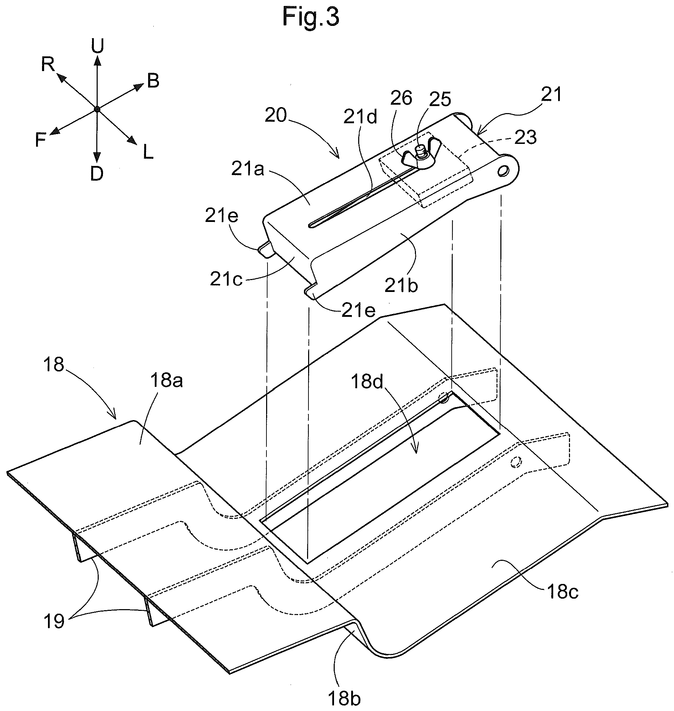

As illustrated in Figs. 3 to 5, the third bottom surface portion 18c is provided with a fullness detector 20 configured to detect that the grass collector 10 has become full of mown grass.

The fullness detector 20 includes a receiver 21, a spring 22 (which corresponds to the "urging member"), a weight 23, a detection sensor 24, a bolt 25 (which corresponds to the "position change operation tool"), and a butterfly nut 26 (which corresponds to the "position change operation tool").

As illustrated in Figs. 3 to 5, the receiver 21 is in the shape of a plate with an edge bent downward, and includes an upper face portion 21a, left and right side face portions 21b, and a front face portion 21c. The upper face portion 21a has a slit 21d along the longitudinal direction of the guide duct 11 (that is, the front-back direction).

The frame members 19 support a pivot shaft 27 extending in the left-right direction under a back portion of the opening 18d (that is, a portion thereof toward the grass collector 10). The receiver 21 is at the opening 18d. The side face portions 21b have respective back portions (that is, portions thereof toward the grass collector 10) held by the pivot shaft 27 in such a manner that the receiver 21 is swingable in the up-down direction.

With the above configuration, the receiver 21 is held by the pivot shaft 27 in such a manner as to be swingable in the up-down direction about the axis P2 of the pivot shaft 27. The receiver 21 extends forward away from the axis P2; in other words, it extends from the axis P2 in the forward direction, which is opposite to the direction toward the grass collector 10. The forward direction is a non-limiting example of the "extension direction" according to the present invention. The axis P2 (pivot shaft 27) extends in the horizontal, left-right direction; in other words, it extends in the left-right direction, which is orthogonal to the direction in which the guide duct 11 extends (that is, the front-back direction).

The description below deals with how the spring 22 and the detection sensor 24 of the fullness detector 20 are configured. As illustrated in Figs. 3 to 5, the spring 22 is in the shape of a coil attached to the pivot shaft 27, and urges the receiver 21 upward (that is, toward the side opposite to the side toward which mown grass presses the receiver 21). The upward direction is a non-limiting example of the "second side" according to the present invention. The side face portions 21b have respective front portions (that is, portions thereof toward the mower unit 8) provided with respective engagement sections 21e protruding forward.

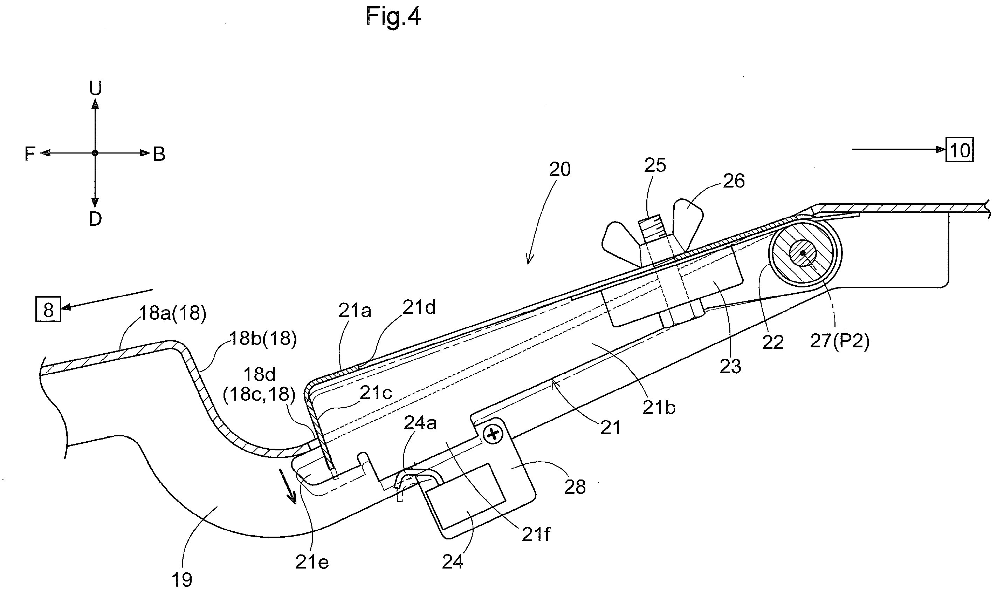

The receiver 21 is urged upward by the spring 22. This causes the engagement sections 21e to engage with those respective portions of the bottom portion 18 which are forward of the opening 18d (that is, those portions thereof toward the mower unit 8), so that the receiver 21 is locked at a lifted position illustrated in Fig. 4.

With the receiver 21 at the lifted position, the upper face portion 21a is above the third bottom surface portion 18c, and the side face portions 21b and the front face portion 21c have respective lower end portions below the third bottom surface portion 18c.

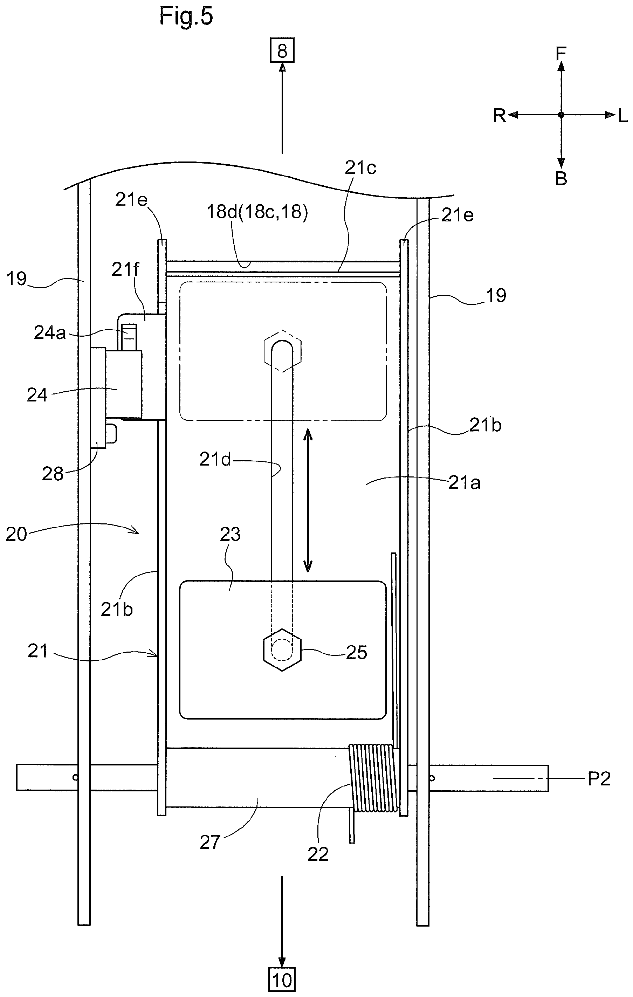

Figs. 4 and 5 illustrate the following: The left frame member 19 is provided with a bracket 28 coupled thereto. The detection sensor 24, which includes a limit switch, is attached to the bracket 28. The left side face portion 21b has a lower end portion provided with an operation section 21f extending therefrom outward to the right. With the receiver 21 at the lifted position, the detection sensor 24 has a contact section 24a in contact with the lower face of the operation section 21f.

In response to the receiver 21 being pressed downward from the lifted position by mown grass, the operation section 21f presses the contact section 24a downward, in other words, the detection sensor 24 detects that the receiver 21 has been pressed downward from the lifted position. The downward direction is a non-limiting example of the "first side" according to the present invention.

The detection sensor 24 detecting that the receiver 21 has been pressed downward from the lifted position indicates the fullness detector 20 detecting that the grass collector 10 has become full.

The description below deals with how the weight 23, the bolt 25, and the butterfly nut 26 of the fullness detector 20 are configured. As illustrated in Figs. 3 to 5, the weight 23 is in the shape of a plate, and is attached to the lower face of the upper face portion 21a of the receiver 21 (that is, the face thereof opposite to that face of the receiver 21 which is pressed by mown grass). The face of the upper face portion 21a which is pressed by mown grass is a non-limiting example of the "first face" according to the present invention. The lower face of the upper face portion 21a is a non-limiting example of the "second face" according to the present invention.

The bolt 25 is inserted upward in and coupled to the weight 23. The bolt 25 extends through the slit 21d and protrudes upward from the upper face portion 21a. The bolt 25 has an upper portion provided with the butterfly nut 26 attached thereto.

Screwing on the butterfly nut 26 fixes the weight 23 to the receiver 21. Unscrewing the butterfly nut 26 and moving the weight 23 and the bolt 25 along the slit 21d moves the weight 23 in the direction in which the receiver 21 extends (that is, the front-back direction).

Lifting the grass container 13 as illustrated in Fig. 2 leaves the front wall 12 open backward. This allows the operator to reach the butterfly nut 26 from backward of the front wall 12 through its opening 12a to unscrew the butterfly nut 26. The operator can move the bolt 25 and the butterfly nut 26 in the front-back direction to move the weight 23 in the direction in which the receiver 21 extends. The operator can then screw on the butterfly nut 26 to fix the weight 23 at a desired position.

As illustrated in Figs. 3 to 5, the spring 22 urges the receiver 21 upward about the axis P2. The weight 23 has a moment based on the moment arm (that is, the distance between the axis P2 and the weight 23). The weight 23 applies its moment load in such a direction as to swing the receiver 21 downward, that is, in such a direction as to decrease the urging force of the spring 22.

Figs. 4 and 5 each illustrate the weight 23 fixed at the position closest possible to the axis P2. In this state, the moment arm (that is, the distance between the axis P2 and the weight 23) is at its shortest, so that the weight 23 has the smallest moment and that the spring 22 exerts the largest urging force.

The receiver 21, in the above state, will not be swung downward from the lifted position unless it is pressed strongly by mown grass. The receiver 21 thus has a low swing sensitivity (insensitive). In other words, the fullness detector 20 has a low detection sensitivity (insensitive).

The operator can slide the weight 23 forward along the slit 21d from the position illustrated in Figs. 4 and 5 to the position farthest possible away from the axis P2, and then fix the weight 23 with use of the butterfly nut 26. In this state, the moment arm (that is, the distance between the axis P2 and the weight 23) is at its longest, so that the weight 23 has the largest moment and that the spring 22 exerts the smallest urging force.

With the weight 23 fixed at the position farthest possible away from the axis P2, the receiver 21 will be swung downward from the lifted position even in response to weak press by mown grass. The receiver 21 thus has a high swing sensitivity (sensitive). In other words, the fullness detector 20 has a high detection sensitivity (sensitive).

As described above, moving the weight 23 in the direction in which the receiver 21 extends to adjust the length of the moment arm (that is, the distance between the axis P2 and the weight 23) changes the level of the moment for swinging the receiver 21. In other words, moving the weight 23 in the direction in which the receiver 21 extends changes the swing sensitivity of the receiver 21 and the detection sensitivity of the fullness detector 20.

As illustrated in Figs. 1, 3, and 4, the fullness detector 20 is on the third bottom surface portion 18c. The fullness detector 20 is thus behind the first bottom surface portion 18a as viewed from the mower unit 8 toward the grass collector 10 through the guide duct 11.

The above configuration reduces the possibility of the front face portion 21c of the receiver 21 catching mown grass being guided from the mower unit 8 through the guide duct 11 toward the grass collector 10.

The description below assumes that the opening 12a in the front wall 12 has been blocked as a result of the grass collector 10 continuing to store mown grass from the mower unit 8 and becoming full (or almost full) regardless of whether the mown grass has accumulated unevenly in the grass collector 10.

The opening 12a being blocked by mown grass as mentioned above prevents mown grass from the mower unit 8 from entering the grass collector 10. Continuing to mow grass in this state leads to mown grass from the mower unit 8 starting to accumulate on a portion of the bottom portion 18 (specifically, the third bottom surface portion 18c) which portion is connected with the front wall 12. The accumulation of mown grass on the bottom portion 18 then grows forward toward the mower unit 8.

In view of the above circumstances, the receiver 21 extends forward away from the axis P2. With this configuration, in a case where the accumulation of mown grass on the bottom portion 18 has grown forward toward the mower unit 8 to eventually reach the fullness detector 20, the mown grass is naturally on the upper face portion 21a and presses the receiver 21 downward from the lifted position.

In response to the receiver 21 being pressed downward from the lifted position by mown grass, the operation section 21f of the receiver 21 presses the contact section 24a of the detection sensor 24 downward, in other words, the detection sensor 24 detects that the receiver 21 has been pressed downward from the lifted position.

Regardless of whether mown grass has accumulated unevenly in the grass collector 10, the fullness detector 20 detects, in response to the detection sensor 24 detecting that the receiver 21 has been pressed downward from the lifted position, that the grass collector 10 has become full. The detection by the detection sensor 24 triggers an alarm (not indicated in the drawings) such as a buzzing sound and/or turns on a warning lamp (not indicated in the drawings)

The operator may move the weight 23 in the direction in which the receiver 21 extends to adjust the moment for swinging the receiver 21 and adjust the swing sensitivity of the receiver 21 and the detection sensitivity of the fullness detector 20.

In response to the alarm being triggered and/or the warning lamp being turned on, the operator stops the mowing operation, and lifts the grass container 13 as illustrated in Fig. 2 to let the grass container 13 discharge mown grass on its front side onto the ground.

Even if the operator did not stop the mowing operation in a timely manner, the second bottom surface portion 18b of the bottom portion 18 will temporarily hold the forward growth of the accumulation of mown grass in the guide duct 11 as illustrated in Figs. 3 and 4. The operator can stop the mowing operation during that time period to prevent the accumulation of mown grass from growing further forward to reach the mower unit 8.

### First Alternative Embodiment

The fullness detector 20 may be disposed at the top portion 16 of the guide duct 11. With the fullness detector 20 configured as such, the receiver 21 protrudes downward from the top portion 16 and is urged by the spring 22 downward. The detection sensor 24 is configured to detect that the receiver 21 has been pressed upward by mown grass, so that the fullness detector 20 detects that the grass collector 10 has become full.

With the above configuration, the spring 22 urges the receiver 21 downward about the axis P2. The weight 23 has a moment based on the moment arm (that is, the distance between the axis P2 and the weight 23). The weight 23 applies its moment load to cause the receiver 21 to swing downward, that is, in such a direction as to increase the urging force of the spring 22.

Fixing the weight 23 at the position closest possible to the axis P2 leads to the moment arm (that is the distance between the axis P2 and the weight 23) being at its shortest, so that the weight 23 has the smallest moment and that the spring 22 exerts the smallest urging force. In this case, the receiver 21 has a high swing sensitivity (sensitive), and the fullness detector 20 has a high detection sensitivity (sensitive).

Fixing the weight 23 at the position farthest possible away from the axis P2 leads to the moment arm (that is the distance between the axis P2 and the weight 23) being at its longest, so that the weight 23 has the largest moment and that the spring 22 exerts the largest urging force. In this case, the receiver 21 has a low swing sensitivity (insensitive), and the fullness detector 20 has a low detection sensitivity (insensitive).

### Second Alternative Embodiment

With the fullness detector 20 disposed at the bottom portion 18 of the guide duct 11, the receiver 21 may extend away from the axis P2 toward the grass collector 10. The receiver 21 configured as such may have a back face portion extending from the back end of the upper face portion 21a obliquely in a downward and backward direction.

### Third Alternative Embodiment

With the fullness detector 20 disposed at the top portion 16 of the guide duct 11, the receiver 21 may extend away from the axis P2 toward the grass collector 10. The receiver 21 configured as such may have a back face portion extending from the back end of the lower face portion of the receiver 21 obliquely in a upward and backward direction.

### Fourth Alternative Embodiment

With the fullness detector 20 disposed at the bottom portion 18 of the guide duct 11, the axis P2 may extend in the horizontal, front-back direction (that is, the direction in which the guide duct 11 extends). The receiver 21 configured as such may have a side face portion 21b on the side toward the grass collector 10 which side face portion 21b extends from the corresponding lateral end of the upper face portion 21a obliquely in a downward and backward direction.

### Fifth Alternative Embodiment

With the fullness detector 20 disposed at the top portion 16 of the guide duct 11, the axis P2 may extend in the horizontal, front-back direction (that is, the direction in which the guide duct 11 extends). The receiver 21 configured as such may have a side face portion 21b on the side toward the grass collector 10 which side face portion 21b extends from the corresponding lateral end of the lower face portion of the receiver 21 obliquely in an upward and backward direction.

### Sixth Alternative Embodiment

The spring 22 as the urging member may be in the shape of a plate spring instead of a coil.

### Seventh Alternative Embodiment

The fullness detector 20 may be disposed at a bottom or top portion of the grass collector 10 (specifically, the grass container 13).

The present invention is applicable not only to a mower including a mower unit 8 between front wheels 1 and rear wheels 2, but also to a mower including a mower unit 8 forward of front wheels 1 and also including a guide duct 11 extending backward from a left or right side portion of the mower unit 8.

## Claims

1. A mower, comprising:
a mower unit (8);
a grass collector (10) configured to store mown grass;
a guide duct (11) extending from the mower unit (8) to the grass collector (10) and configured to guide grass mown by the mower unit (8) to the grass collector (10); and
a fullness detector (20) configured to detect that the grass collector (10) has become full of mown grass,
the fullness detector (20) including:
a receiver (21) swingable in an up-down direction about a horizontal axis (P2), extending in an extension direction away from the axis (P2), and configured to be pressed toward a first side by mown grass in contact with the receiver (21);
an urging member (22) urging the receiver (21) toward a second side opposite to the first side; and
a detection sensor (24) configured to detect that the receiver (21) has been pressed by mown grass;
**characterized in that** the fullness detector (20) includes a weight (23) attached to the receiver (21) and movable in the extension direction of the receiver (21) toward or away from the axis (P2) to adjust a sensitivity with which the receiver (21) swings in response to a press by mown grass.

2. The mower according to claim 1, wherein
the weight (23) is attached to a first face of the receiver (21) which first face is opposite to a second face of the receiver (21) which second face is configured to be pressed toward the first side by the mown grass in contact with the receiver (21).

3. The mower according to claim 1 or 2, further comprising:
a position change operation tool (25, 26) manually operable to fix and unfix the weight (23) and to move the weight (23) in the extension direction of the receiver (21).

4. The mower according to any one of claims 1 to 3, wherein
the fullness detector (20) is provided for a bottom portion (18) of the guide duct (11), and
the detection sensor (24) is configured to detect that the receiver (21) has been pressed downward by mown grass.

5. The mower according to claim 4, wherein
the axis (P2) is orthogonal to a direction in which the guide duct (11) extends, and
the receiver (21) extends away from the axis (P2) toward a side opposite to the grass collector (10).

6. The mower according to claim 4 or 5, wherein
the bottom portion (18) includes:
a first bottom surface portion (18a) with an end on a side toward the grass collector (10);
a second bottom surface portion (18b) extending downward from the end of the first bottom surface portion (18a); and
a third bottom surface portion (18c) extending from a lower portion of the second bottom surface portion (18b) toward the grass collector (10), and
the fullness detector (20) is provided for the third bottom surface portion (18c).

## Patentansprüche

1. Mähmaschine, umfassend:
eine Mäheinheit (8);
einen Grasfang (10), der konfiguriert ist, um gemähtes Gras zu speichern;
einen Führungskanal (11), der sich von der Mäheinheit (8) zu dem Grasfang (10) erstreckt und konfiguriert ist, um von der Mäheinheit (8) gemähtes Gras zu dem Grasfang (10) zu führen; und
einen Vollzustandsdetektor (20), der konfiguriert ist, um zu erkennen, dass der Grasfang (10) voll mit gemähtem Gras geworden ist,
wobei der Vollzustandsdetektor (20) Folgendes beinhaltet:
eine Aufnahme (21), die in einer Auf-Ab-Richtung um eine horizontale Achse (P2) schwenkbar ist, sich in einer Erstreckungsrichtung weg von der Achse (P2) erstreckt und konfiguriert ist, um durch gemähtes Gras, das mit der Aufnahme (21) in Kontakt ist, zu einer ersten Seite gedrückt zu werden;
ein Druckelement (22), das den Empfänger (21) zu einer zweiten Seite gegenüber der ersten Seite zu drücken; und
einen Erkennungssensor (24), der konfiguriert ist, um zu erkennen, dass der Empfänger (21) durch gemähtes Gras gedrückt wurde;
**dadurch gekennzeichnet, dass** der Vollzustandsdetektor (20) ein Gewicht (23) umfasst, das an der Aufnahme (21) angebracht ist und in der Erstreckungsrichtung der Aufnahme (21) zu oder weg von der Achse (P2) bewegbar ist, um eine Empfindlichkeit einzustellen, mit der die Aufnahme (21) als Reaktion auf einen Druck von gemähtem Gras schwenkt.

2. Mähmaschine nach Anspruch 1, wobei
das Gewicht (23) an einer ersten Fläche der Aufnahme (21) angebracht ist, wobei die erste Fläche gegenüber einer zweiten Fläche der Aufnahme (21) ist, wobei die zweite Fläche konfiguriert ist, um durch das gemähte Gras in Kontakt mit der Aufnahme (21) zu der ersten Seite gedrückt zu werden.

3. Mähmaschine nach Anspruch 1 oder 2, ferner umfassend:
ein Positionsänderung-Betätigungswerkzeug (25, 26), das manuell betätigt werden kann, um das Gewicht (23) zu befestigen und zu lösen und um das Gewicht (23) in der Erstreckungsrichtung der Aufnahme (21) zu bewegen.

4. Mähmaschine nach einem der Ansprüche 1 bis 3, wobei
der Vollzustandsdetektor (20) für einen unteren Abschnitt (18) des Führungskanals (11) bereitgestellt ist, und
der Erkennungssensor (24) konfiguriert ist, um zu erkennen, dass die Aufnahme (21) durch gemähtes Gras nach unten gepresst wurde.

5. Mähmaschine nach Anspruch 4, wobei
die Achse (P2) orthogonal zu einer Richtung ist, in der sich der Führungskanal (11) erstreckt, und
sich die Aufnahme (21) weg von der Achse (P2) zu einer Seite gegenüber dem Grasfang (10) erstreckt.

6. Mähmaschine nach Anspruch 4 oder 5, wobei
der untere Abschnitt (18) Folgendes beinhaltet:
einen ersten Bodenflächenabschnitt (18a) mit einem Ende auf einer Seite zu dem Grasfang (10);
einen zweiten Bodenflächenabschnitt (18b), der sich von dem Ende des ersten Bodenflächenabschnitts (18a) nach unten erstreckt; und
einen dritten Bodenflächenabschnitt (18c), der sich von einem unteren Abschnitt des zweiten Bodenflächenabschnitts (18b) in Richtung des Grasfangs (10) erstreckt, und
der Vollzustandsdetektor (20) für den dritten Bodenflächenabschnitt (18c) bereitgestellt ist.

## Revendications

1. Tondeuse, comprenant :
une unité de tonte (8) ;
un collecteur d'herbe (10) configuré pour stocker l'herbe tondue ;
un conduit de guidage (11) s'étendant de l'unité de tonte (8) au collecteur d'herbe (10) et configuré pour guider l'herbe tondue par l'unité de tonte (8) vers le collecteur d'herbe (10) ; et
un détecteur de remplissage (20) configuré pour détecter que le collecteur d'herbe (10) s'est rempli d'herbe tondue,
le détecteur de remplissage (20) comportant :
un récepteur (21) pouvant osciller dans une direction de haut en bas autour d'un axe horizontal (P2), s'étendant dans une direction d'extension à l'opposé de l'axe (P2), et configuré pour être comprimé vers un premier côté par l'herbe tondue en contact avec le récepteur (21) ;
un élément de poussée (22) poussant le récepteur (21) vers un deuxième côté opposé au premier côté ; et
un capteur de détection (24) configuré pour détecter que le récepteur (21) a été comprimé par l'herbe tondue ;
**caractérisée en ce que** le détecteur de remplissage (20) comporte un poids (23) fixé au récepteur (21) et mobile dans la direction d'extension du récepteur (21) vers ou à l'opposé de l'axe (P2) afin d'ajuster une sensibilité avec laquelle le récepteur (21) oscille en réponse à une pression par l'herbe tondue.

2. Tondeuse selon la revendication 1, dans laquelle :
le poids (23) est fixé sur une première face du récepteur (21), laquelle première face est opposée à une deuxième face du récepteur (21), laquelle deuxième face est configurée pour être comprimée vers le premier côté par l'herbe tondue en contact avec le récepteur (21).

3. Tondeuse selon la revendication 1 ou 2, comprenant en outre :
un outil opérationnel de changement de position (25, 26) qui peut être actionné manuellement pour fixer et détacher le poids (23) et pour déplacer le poids (23) dans la direction d'extension du récepteur (21).

4. Tondeuse selon l'une quelconque des revendications 1 à 3, dans laquelle :
le détecteur de remplissage (20) est prévu pour une partie inférieure (18) du conduit de guidage (11), et
le capteur de détection (24) est configuré pour détecter que le récepteur (21) a été comprimé vers le bas par l'herbe tondue.

5. Tondeuse selon la revendication 4, dans laquelle :
l'axe (P2) est orthogonal à une direction dans laquelle le conduit de guidage (11) s'étend, et
le récepteur (21) s'étend à l'opposé de l'axe (P2) vers un côté opposé au collecteur d'herbe (10).

6. Tondeuse selon la revendication 4 ou 5, dans laquelle :
la partie inférieure (18) comporte :
une première partie de surface inférieure (18a) avec une extrémité du côté vers le collecteur d'herbe (10) ;
une deuxième partie de surface inférieure (18b) s'étendant vers le bas à partir de l'extrémité de la première partie de surface inférieure (18a) ; et
une troisième partie de surface inférieure (18c) s'étendant à partir d'une partie inférieure de la deuxième partie de surface inférieure (18b) vers le collecteur d'herbe (10), et
le détecteur de remplissage (20) est prévu pour la troisième partie de surface inférieure (18c).
